## Europäisches Patentamt
## European Patent Office
## Office européen des brevets

(19)

(11) Numéro de publication : **0 282 376 B1**

(12)

# FASCICULE DE BREVET EUROPEEN

(45) Date de publication du fascicule du brevet :
**17.04.91 Bulletin 91/16**

(51) Int. Cl.$^5$ : **C04B 35/80**

(21) Numéro de dépôt : **88400323.7**

(22) Date de dépôt : **12.02.88**

(54) **Matière céramique composite à filaments de renforcement, et procédé pour la fabrication d'une telle matière.**

(30) Priorité : **16.02.87 FR 8701946**

(43) Date de publication de la demande :
**14.09.88 Bulletin 88/37**

(45) Mention de la délivrance du brevet :
**17.04.91 Bulletin 91/16**

(84) Etats contractants désignés :
**AT BE DE ES GB IT NL SE**

(56) Documents cités :
**EP-A- 0 214 034**
**US-A- 4 507 224**
**US-A- 4 543 345**
**CHEMICAL ABSTRACTS, vol. 101, no. 12, septembre 1984, page 333, résumé no. 96478q, Columbus, Ohio, US; & JP-A-59 54 680 (AGENCY OF INDUSTRIAL SCIENCES AND TECHNOLOGY) 29-03-1984**

(56) Documents cités :
**AMERICAN CERAMIC SOCIETY BULLETIN, vol. 64, no. 2, février 1985, pages 298-304, Columbus, Ohio, US; G.C. WEI et al.: "Development of SiC-whisker-reinforced ceramics"**
**AMERICAN CERAMIC SOCIETY BULLETIN, vol. 65, no. 2, janvier 1986, pages 351-356, Columbus, Ohio, US; P.D. SHALEK et al.: "Hot-pressed SiC whisker/Si3N4 matrix composites"**

(73) Titulaire : **AEROSPATIALE SOCIETE NATIONALE INDUSTRIELLE Société Anonyme dite:**
**37, Boulevard de Montmorency**
**F-75016 Paris (FR)**

(72) Inventeur : **Debaig-Valade, Caroline**
**18, Impasse Genesta**
**F-33200 Bordeaux (FR)**
Inventeur : **Goursat, Paul**
**Haut Felix**
**F-87430 Verneuil/Vienne (FR)**
Inventeur : **Desmarres, Jean Michel**
**71, rue de Corgnac**
**F-87100 Limoges (FR)**

(74) Mandataire : **Bonnetat, Christian et al**
**CABINET BONNETAT 23, Rue de Léningrad**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

Matière céramique composite à filaments de renforcement, et procédé pour la fabrication d'une telle matière.

La présente invention concerne une matière céramique obtenue par frittage sous charge d'une poudre de nitrure de silicium incorporant des filaments de renforcement.

On sait que les matières céramiques thermomécaniques présentent par rapport aux métaux de nombreux avantages, tels que légèreté, résistance mécanique élevée à haute température, inertie chimique et bons comportements aux frottements et à l'usure.

Pour encore améliorer les propriétés mécaniques et physiques de ces matières céramiques massives, on a déjà pensé à incorporer des fibres réfractaires de renforcement dans la matrice céramique.

Par exemple, l'article de K. UENO et Y. TOIBONA dans "J. of Ceram. Soc. Japan", 91, 11 (1983), pages 491-497 révèle une matière céramique réalisée à partir d'une poudre de nitrure de silicium renforcée de fibres de carbure de silicium.

Toutefois, l'introduction de telles fibres de renforcement dans la poudre, à partir de laquelle ladite matière est obtenue par frittage, soulève de nombreuses difficultés :

a) les fibres de renforcement ont tendance à s'agglomérer et il est difficile de les disperser dans la poudre à fritter ; le mélange poudre-fibres est peu homogène, de sorte qu'il en est de même de la céramique renforcée obtenue et de ses propriétés mécaniques et physiques ; de plus, cette difficulté de dispersion des fibres dans la poudre empêche l'obtention d'une densité élevée pour ledit mélange qui présente en revanche une porosité importante.

b) le frittage de la poudre réfractaire nécessite l'application d'une température élevée (1800°C dans le cas de l'article précité), ce qui a deux conséquences :

1) endommagement thermique des fibres, qui perdent leur résistance mécanique et ne peuvent donc plus remplir leur office de renforcement ;

2) accroissement des interactions chimiques aux interfaces entre les fibres et la matrice, ce qui agit dans le sens de la solidarisation entre les fibres et la matrice et donc dans le sens de la diminution de la résistance mécanique de la matière céramique.

c) le frittage de la poudre nécessite l'application d'une pression élevée (de l'ordre de 50 MPa) et il en résulte que les fibres de renforcement sont écrasées et/ou brisées par les grains de la poudre en cours de frittage et perdent leurs caractéristiques mécaniques.

La présente invention a pour objet de remédier à ces inconvénients et de réaliser une matière composite céramique/céramique frittée présentant notamment une résistance mécanique élevée.

A cette fin, selon l'invention, la matière céramique obtenue par frittage sous charge d'une poudre de nitrure de silicium incorporant des filaments de renforcement, est remarquable en ce que lesdits filaments de renforcement sont des trichites de carbure de silicium et/ou de nitrure de silicium ayant une longueur de 10 à 300 microns et un diamètre de l'ordre de 0,1 à 0,5 micron, et en ce que la granulométrie de la poudre est comprise entre 0,1 et 0,8 micron en fonction directe du diamètre desdits filaments de renforcement.

Avantageusement, la proportion pondérale de filaments de renforcement est au plus égale à 40%.

Par ailleurs, la matière céramique peut incorporer des adjuvants de densification dans une proportion pondérale au plus égale à 10%.

On suppose, pour expliquer les propriétés avantageuses (montrées ci-après) de la matière céramique selon l'invention, que l'on bénéficie des conditions favorables suivantes :

– tout d'abord, puisque les filaments de renforcement sont courts (inférieurs à 300 microns), il est possible d'obtenir une dispersion satisfaisante desdits filaments et donc une bonne homogénéité du mélange poudre-filaments. Le mélange peut être alors effectué par des moyens connus, comme il sera expliqué ci-après ;

– la granulométrie de la poudre étant faible (entre 0,1 et 0,8 micron) et adaptée au diamètre des filaments, ceux-ci ne sont pas endommagés lors de l'application de la pression de frittage et ils conservent donc leurs propriétés mécaniques ;

– la granulométrie de la poudre étant faible, l'action de la pression de frittage est plus efficace, de sorte que cette pression peut être plus faible ;

– de même, à cause de la faible granulométrie de la poudre, la température de frittage peut être plus basse, ce qui participe à la conservation des propriétés mécaniques des filaments de renforcement ;

– la relativement basse température de frittage, jointe à la compatibilité physique et chimique des filaments de renforcement avec le nitrure de silicium, permet de limiter les inter-actions aux interfaces.

L'incorporation des adjuvants de densification dans une proportion au plus égale à 10% permet d'abaisser encore la température et la pression de frittage.

Selon un autre aspect de la présente invention, un procédé pour l'obtention d'une matière céramique par frittage sous charge d'une poudre de nitrure de silicium incorporant des filaments de renforcement

est remarquable en ce que l'on réalise le mélange intime d'une poudre de nitrure de silicium, de filaments de renforcement en carbure de silicium et/ou en nitrure de silicium et d'au moins un adjuvant de densification, lesdits filaments de renforcement ayant une longueur de 10 à 300 microns et un diamètre de l'ordre de 0,1 à 0,5 micron et la granulométrie de ladite poudre étant comprise entre 0,1 et 0,8 micron en fonction directe du diamètre desdits filaments de renforcement, après quoi ledit mélange est fritté à une température comprise entre 1500°C et 1750°C et sous une pression au plus égale à 40 MPa.

Avantageusement, la température et la pression maximales de frittage sont maintenues pendant environ 2 heures. De préférence, avant le frittage, on filtre ledit mélange par "filtre-pressage".

Les figures du dessin annexé feront bien comprendre comment l'invention peut être réalisée.

La figure 1 est une vue schématique d'un appareil pour mettre en oeuvre la technique dite de "filtre-pressage".

La figure 2 est une vue schématique d'un appareil de frittage.

La figure 3 montre des courbes de contraintes de rupture à chaud de différentes matières céramiques.

Les filaments de renforcement sont additionnés (dans une proportion maximale de 40% en poids) à la poudre de nitrure de silicium de granulométrie correspondante et à des adjuvants de densification, tels que CaO, $Al_2O_3$, MgO, $Y_2O_3$, $ZrO_2$ ou des oxydes de terres rares. Les propriétés de ces adjuvants, concernant la densification des matières frittées sous charge, sont bien connues. Dans le cadre de la présente invention, on utilise une proportion pondérale d'adjuvants de densification au plus égale à 10%, et de préférence de l'ordre de 7%.

Pour faciliter la désagglomération des filaments et obtenir un mélange poudre-filaments aussi homogène que possible, on peut utiliser différentes techniques connues, telles que la métallurgie des poudres et/ou la mise en oeuvre de résines thermoplastiques et de résines thermodurcissables.

De préférence, on mélange la poudre de nitrure de silicium, les adjuvants de densification et les filaments de renforcement dans un solvant polaire, tel que l'eau ou un alcool, et contenant un ou plusieurs agents dispersants, à l'aide d'un disperseur mécanique rotatif à grande vitesse. On peut par exemple utiliser un disperseur de marque "POLY TRON". La vitesse de rotation élevée (15000 tours par minute) de ce disperseur crée des chocs et des turbulences très importants, qui font disparaître les agglomérats de filaments et de grains de poudre. La barbotine ainsi obtenue peut ensuite être traitée par ultra-sons pour parfaire son homogénéisation, puis être brassée de nouveau énergiquement à l'aide du disperseur mécanique. La barbotine est alors filtrée, puis séchée, pour en éliminer les liquides et fournir des gâteaux de filtration destinés à être frittés sous charge. Eventuellement, ces gâteaux de filtration sont précompactés, par exemple sous ultra-sons, avant frittage.

Après la mise en suspension, il faut filtrer le mélange le plus rapidement possible pour éviter la sédimentation des trichites et de la poudre.

La filtration est réalisée à l'aide de la technique dite de "filtre-pressage".

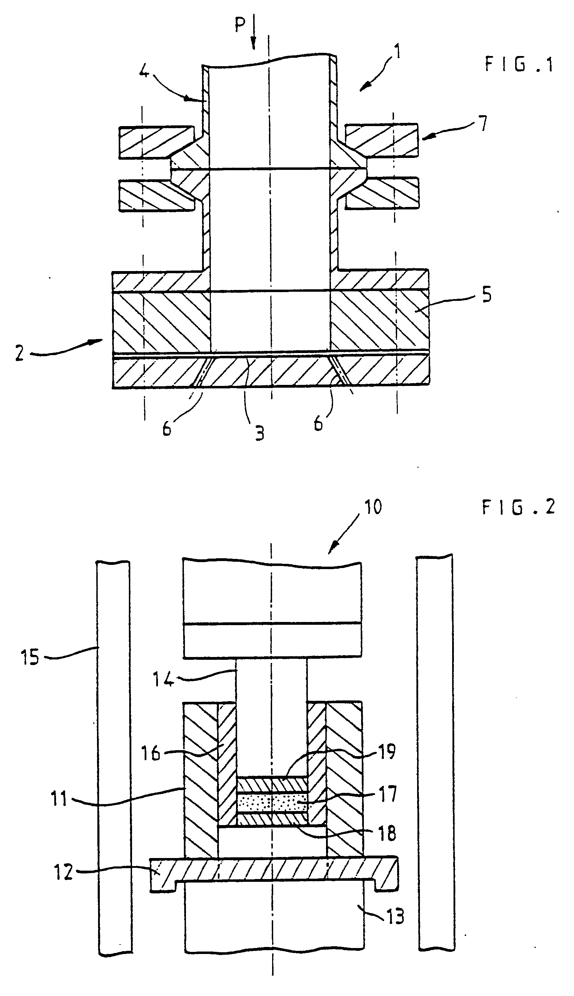

Après le brassage, la suspension est versée dans un dispositif étanche 1 (figure 1) dont l'extrémité inférieure 2 se termine par un filtre de type porcelaine 3 avec canaux d'évacuation 6, et l'extrémité supérieure 4 maintenue par une bride 7 est reliée à un générateur de pression (non représenté). La pression P appliquée est supérieure à 5 bars. Le mélange poudre-trichites, récupéré dans le moule 5, est séché à l'étuve.

Pour réaliser ensuite le frittage, on utilise par exemple l'appareil 10 montré par la figure 2. Cet appareil comporte essentiellement un moule 11 qui repose sur un support 12, par exemple lui-même supporté par un contre-piston hydropneumatique 13, et qui est traversé par un piston hydropneumatique 14 susceptible de coopérer avec ledit contre-piston 13 et entouré par un dispositif de chauffage électrique à induction 15. Le moule 11 comporte une chemise intérieure de graphite 16 et le gâteau à fritter 17 est disposé à l'intérieur de ladite chemise. La pression du piston 14 et du contre-piston 13 est appliquée au gâteau 17 par l'intermédiaire de pastilles de graphite 18 et 19.

Après mise en place d'un gâteau 17 dans l'appareil de frittage, il est avantageux de commander le dispositif de chauffage 15 de façon que la température augmente rapidement jusqu'à environ 1250°C, après quoi on commande les piston et contre-piston 13 et 14 pour faire passer la pression de 0 à environ 40 MPa tout en augmentant la température jusqu'à une valeur de palier comprise entre 1500°C et 1750°C. La pression de 40 MPa et la température de palier sont appliquées pendant environ 2 heures, après quoi on procède au refroidissement de l'échantillon fritté, obtenu à partir du gâteau 17. Ce refroidissement s'effectue de façon libre ou programmée.

Afin de pouvoir faire des essais comparatifs, on fabrique avec l'appareil de la figure 2, et dans des conditions opératoires identiques pour tous, des échantillons :

- de matière céramique massive (sans filaments de renforcement mais avec adjuvants) à partir de poudre de nitrure de silicium de granulométrie voisine de 1 micron ;
- de matière céramique avec trichites de renforcement à partir de poudre de nitrure de silicium de granulométrie voisine de 1 micron ;
- de matière céramique avec trichites de renforcement à partir de poudre de nitrure de silicium de granulométrie voisine de 0,6 micron.

Dans les deux derniers cas, les matières céramiques étudiées sont constituées à partir de mélanges à 70% de poudre de nitrure de silicium et à 30% de trichites de carbure de silicium de longueur de 10 à 40 microns et de diamètre de 0,1 à 0,5 micron.

La poudre de nitrure de silicium de granulométrie voisine de 1 micron contient des ajouts de $Al_2O_3$ (2%) et de $Y_2O_3$ (1,5%), et la poudre de nitrure de silicium de granulométrie voisine de 0,6 micron est dopée par 4% d'oxyde de magnésium (les pourcentages sont indiqués par rapport à la composition totale).

La mise en suspension est réalisée dans de l'éthanol à 96,2% en utilisant 0,1% de dispersant.

La filtration est réalisée par filtre-pressage, et les conditions de frittage sont comme indiquées précédemment.

Les échantillons obtenus se présentent sous forme de disques de 30 à 120 mm de diamètre et d'épaisseur de 3 à 12 mm. Ils sont rectifiés et découpés à l'aide d'outils diamantés. Les éprouvettes pour les essais mécaniques, de dimensions 4 mm × 4 mm × 30 mm, sont ensuite polies sur du papier au carbure de silicium.

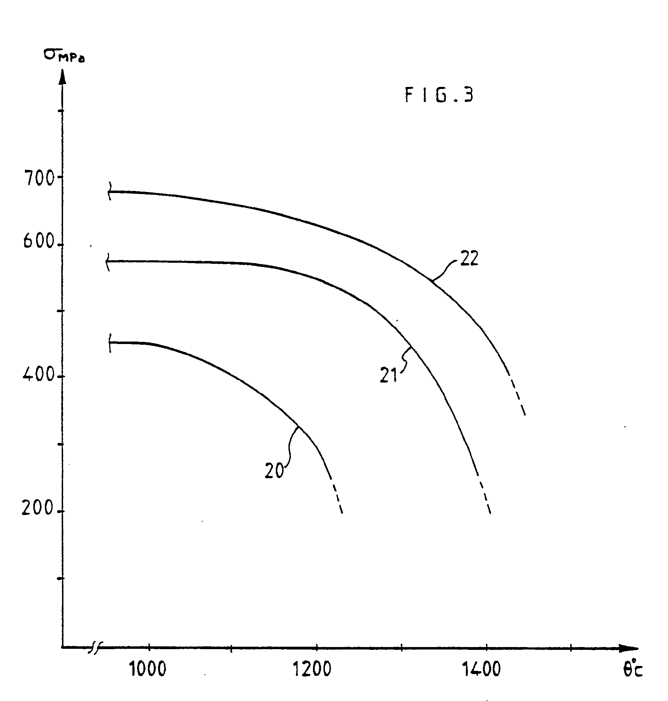

Sur la figure 3, sont donnés, sous forme de courbes, les résultats de tests de rupture à chaud réalisés sur lesdits échantillons. La courbe 20 montre le comportement de la matière céramique massive précédemment définie, la courbe 21 celui de la matière céramique, avec trichites de renforcement, réalisée à partir d'une poudre de granulométrie voisine de 1 micron, et la courbe 22 celui de la matière céramique, avec trichites de renforcement, réalisée à partir d'une poudre de granulométrie voisine de 0,6 micron.

On constate, tout d'abord, des résistances à la rupture supérieures pour les céramiques composites par rapport au matériau monolithique. De plus, de façon tout à fait inattendue, une nette amélioration est constatée pour la matière céramique réalisée à partir d'une poudre de granulométrie voisine de 0,6 micron par rapport à celle de granulométrie voisine de 1 micron.

On suppose que cet effet résulte d'une meilleure adéquation entre la taille des grains de poudre et la taille des trichites de renforcement.

En outre, on observe un meilleur comportement mécanique à températures élevées pour les céramiques composites, avec un gain de 200 à 300°C par rapport à la céramique massive.

Ce comportement est encore amélioré dans le cas de la céramique composite réalisée à partir d'une poudre de granulométrie voisine de 0,6 micron.

On notera, par ailleurs, que, déjà à froid, les tests montrent que les résistances à la rupture sont supérieures pour les céramiques composites par rapport à la céramique massive, et supérieures pour la céramique à base de poudre de granulométrie voisine de 0,6 micron par rapport à celle de granulométrie voisine de 1 micron, les valeurs respectives étant de l'ordre de :

450 MPa, 600 MPa et 700 MPa.

Il apparaît donc qu'une granulométrie voisine de 0,6 micron est particulièrement critique en ce qui concerne la résistance mécanique de la céramique composite.

Des tests de ténacité effectués sur les mêmes types d'échantillons montrent des résultats comparables pour les deux céramiques composites testées, et bien supérieurs à ceux concernant la céramique massive. En effet, la ténacité de la céramique monolithique est de l'ordre de 5 MPa m1/2, alors que celle de la céramique selon l'invention est de l'ordre de 10 MPa m1/2.

Dans ces conditions, le matières céramiques selon l'invention, en raison de leur résistance mécanique élevée notamment à haute température, sont particulièrement appropriées à être utilisées en substitution aux métaux réfractaires, par exemple pour la réalisation de pièces de moteurs (diesel, turbomachines, propulseurs, etc...), de blindages contre les projectiles, de pièces de frottement, d'outils de coupe et de forage, etc...

**Revendications**

1. Matière céramique composite obtenue par frittage sous charge d'une poudre de nitrure de silicium incorporant des filaments de renforcement, caractérisée en ce que lesdits filaments de renforcement sont des trichites de carbure de silicium et/ou de nitrure de silicium ayant une longueur de 10 à 300 microns et un diamètre de l'ordre de 0,1 à 0,5 micron, et en ce que la granulométrie de la poudre est comprise entre 0,1 et 0,8 micron en fonction directe du diamètre desdits filaments de renforcement.

2. Matière céramique selon la revendication 1, caractérisée en ce que la proportion pondérale de filaments de renforcement est au plus égale à 40%.

3. Matière céramique selon la revendication 1 ou la revendication 2, caractérisée en ce qu'elle incorpore des adjuvants de densification dans une proportion pondérale au plus égale à 10%.

4. Procédé pour l'obtention d'une matière céramique par frittage sous charge d'une poudre incorporant des filaments de renforcement, caractérisé en ce que l'on réalise le mélange intime d'une poudre de nitrure de silicium, de filaments de renforcement en carbure de silicium et/ou en nitrure de silicium et d'au moins un adjuvant de densification, lesdits filaments de renforcement ayant une longueur de 10 à 300 microns et un diamètre de 0,1 à 0,5 micron et la granulométrie de ladite poudre étant comprise entre 0,1 et 0,8 micron en fonction directe du diamètre desdits filaments de renforcement, après quoi ledit mélange est fritté à une température comprise entre 1500°C et 1750°C et sous une pression au plus égale à 40 MPa.

5. Procédé selon la revendication 4,
caractérisé en ce que la température et la pression maximales de frittage sont maintenues pendant environ 2 heures.

6. Procédé selon la revendication 4 ou la revendication 5,
caractérisé en ce que, avant le frittage, on filtre ledit mélange par "filtre-pressage".

## Ansprüche

1. Faserverstärkter Keramikverbundwerkstoff, der mit einem Siliziumnitridpulver unter Last gefrittet wurde, dadurch **gekennzeichnet**, daß die Verstärkungsfasern Trichite aus Siliziumkarbid und/oder Siliziumnitrid mit einer Länge von 10 bis 300 Mikron und einem Durchmesser von 0,1 bis 0,5 Mikron sind und daß die Kornklassierung des Pulvers in unmittelbarer Abhängigkeit vom Durchmesser der Verstärkungsfasern zwischen 0,1 und 0,8 Mikron liegt.

2. Faserverstärkter Keramikverbundwerkstoff nach Anspruch 1, dadurch **gekennzeichnet**, daß der Gewichtsanteil der Verstärkungsfasern bei höchstens 40% liegt.

3. Faserverstärkter Keramikverbundwerkstoff nach einem der vorhergehenden Ansprüche 1 oder 2, dadurch **gekennzeichnet**, daß nachverdichtende Zusatzstoffe in einem Gewichtsanteil von höchstens 10% zugesetzt werden.

4. Verfahren zur Darstellung eines faserverstärkten Keramikverbundwerkstoffes durch Frittieren eines Pulvers unter Last, dadurch **gekennzeichnet**, daß eine intensive Mischung aus Siliziumnitridpulver, Siliziumkarbid- und/oder Siliziumnitrid-Verstärkungsfasern und zumindest einem nachverdichtenden Zusatzstoff hergestellt wird, wobei die Verstärkungsfasern eine Länge von 10 bis 300 Mikron und einen Durchmesser von 0,1 bis 0,5 Mikron haben und die Kornklassierung des Pulvers in unmittelbarer Abhängigkeit vom Durchmesser der Verstärkungsfasern zwischen 0,1 und 0,8 Mikron liegt, wonach die Mischung bei einer zwischen 1500°C und 1750°C liegenden Temperatur und unter einem bei höchstens 40 MPa liegendem Druck frittiert wird.

5. Verfahren nach Anspruch 4, dadurch **gekennzeichnet**, daß die maximale Temperatur und der maximale Druck beim Frittieren für eine Dauer von annähernd 2 Stunden aufrechterhalten werden.

6. Verfahren nach einem der vorhergehenden Ansprüche 4 oder 5, dadurch **gekennzeichnet**, daß die Mischung vor dem Frittieren durch "Filterpressen" gefiltert wird.

## Claims

1. Compound ceramic material obtained by sintering under pressure of a silicon nitride powder incorporating reinforcing filaments,
characterized in that said reinforcing filaments are whiskers of silicon carbide and/or of silicon nitride having a length of 10 to 300 microns and a diameter of 0.1 to 0.5 micron, and in that the granulometry of the powder is included between 0.1 and 0.8 micron as a direct function of the diameter of said reinforcing filaments.

2. Ceramic material according to claim 1,
characterized in that the proportion by weight of reinforcing filaments is at the most equal to 40%

3. Ceramic material according to claim 1 or claim 2,
characterized in that it incorporates additives for densification in a proportion by weight at the most equal to 10%.

4. Process for obtaining a ceramic material by sintering under pressure of a powder incorporating reinforcing filaments,
characterized in that an intimate mixture is made of a silicon nitride powder, reinforcing filaments made of silicon carbide and/or silicon nitride and at least one additive for densification, said reinforcing filaments having a length of 10 to 300 microns and a diameter of 0.1 to 0.5 micron and the granulometry of said powder being included between 0.1 and 0.8 micron as a direct function of the diameter of said reinforcing filaments, after which said mixture is sintered at a temperature included between 1500°C and 1750°C and under a pressure at the most equal to 40 MPa.

5. Process according to claim 4,
characterized in that the maximum sintering temperature and pressure are maintained for about 2 hours.

6. Process according to claim 4 or claim 5,
characterized in that, before sintering, said mixture is filtered by " filter-pressing".

FIG.1

FIG.2

FIG.3